# EUROPÄISCHE PATENTSCHRIFT

(11) **EP 4 463 758 B1**
(45) Veröffentlichungstag und Bekanntmachung des Hinweises auf die Patenterteilung: **29.07.2026**
(21) Anmeldenummer: 22802999.7
(22) Anmeldetag: 19.10.2022
(51) Int. Cl.: G06F 3/0484, B60K 35/10, B60K 35/22, B60K 35/28

(54) **VERFAHREN, COMPUTERPROGRAMM, VORRICHTUNG UND NUTZERSCHNITTSTELLE ZUM WIEDERHERSTELLEN AUTOMATISCH ZURÜCKGESETZTER EINSTELLUNGEN EINER MASCHINE**
METHOD, COMPUTER PROGRAM, DEVICE AND USER INTERFACE FOR RESTORING AUTOMATICALLY RESET SETTINGS OF A MACHINE
PROCÉDÉ, PROGRAMME INFORMATIQUE, DISPOSITIF ET INTERFACE UTILISATEUR POUR RESTAURER LES RÉGLAGES AUTOMATIQUEMENT RÉINITIALISÉS D'UNE MACHINE

(30) Priorität: 12.01.2022 DE 102022200235
(43) Veröffentlichungstag der Anmeldung: 20.11.2024
(73) Patentinhaber: VOLKSWAGEN AKTIENGESELLSCHAFT, 38440 Wolfsburg (DE)
(72) Erfinder: SANDBRINK, Johanna, 38102 Braunschweig (DE); PUHLE, Marie, 38106 Braunschweig (DE); SIEGMUND, Margret, 38518 Gifhorn (DE); NEUMANN, Markus, 38533 Vordorf (DE); SEITZ, Gordon, 38468 Ehra-Lessien (DE); HOFMANN, Martin, 38165 Lehre (DE)
(86) Internationale Anmeldenummer: PCT/EP2022/079050
(87) Internationale Veröffentlichungsnummer: WO 2023/134890

(56) Entgegenhaltungen:
- EP-A1- 3 361 366
- EP-A1- 3 540 581
- WO-A2-2012/170446
- DE-A1- 102012 010 490
- DE-A1- 102015 007 741
- JP-A- 2020 137 071
- US-B2- 7 747 967

## Beschreibung

Die vorliegende Erfindung betrifft ein Verfahren, ein Computerprogramm mit Instruktionen, eine Vorrichtung und eine Nutzerschnittstelle zum Wiederherstellen von Einstellungen einer Maschine, die automatisch von einer vom Nutzer vorgenommenen Einstellung auf einen Standardwert für die jeweilige Einstellung zurückgesetzt wurden. Die Erfindung betrifft weiterhin eine Maschine, in der ein erfindungsgemäßes Verfahren, eine erfindungsgemäße Vorrichtung oder eine erfindungsgemäße Nutzerschnittstelle eingesetzt wird.

Spezifische Einstellungen einer Maschine, beispielsweise eines Fortbewegungsmittels, werden in der Regel über ein Abschalten und erneutes Einschalten der Maschine für den jeweiligen Nutzer im Rahmen einer Personalisierung gespeichert.

Beispielsweise beschreibt DE 10 2015 007 741 A1 ein Verfahren zum Betreiben eines Fahrzeugs durch Bereitstellen mehrerer Profile, die jeweils nutzerspezifische Einstelldaten für das Fahrzeug beinhalten. Mittels eines Kombiinstruments des Fahrzeugs erfolgt ein initiales Auswählen eines der Profile. Demgegenüber erfolgt ein Wechseln oder Verwalten des jeweiligen ausgewählten Profils mit einer Haupteinheit des Fahrzeugs.

DE 100 12 756 B4 beschreibt ein Verfahren zur Abspeicherung und Abrufung individueller Einstellungen von betriebsrelevanten, elektrisch ein- oder verstellbaren Elementen im Kraftfahrzeug. Bei dem Verfahren wird bei Inbetriebnahme des Fahrzeuges über ein Display eine Benutzeridentifikation oder Benutzerzuweisung abgefragt. Auf dem Display werden dazu Memorytasten oder Memorytastenfelder generiert, bei deren Betätigung eine bereits abgespeicherte Kennung abgerufen wird. Zudem wird eine Gasttaste generiert, bei deren Betätigung eine Gastkennung erfolgt. Bei Betätigung der Gasttaste wird zur Einstellung aller verstellbaren Elemente aufgefordert, wobei die nach Betätigung der Gasttaste vorgenommenen Einstellungen der verstellbaren Elemente nicht abgespeichert werden.

EP 3 540 581 A1 beschreibt ein Verfahren zur Einstellung von Fahrzeugeinstellungen durch einen Benutzer über ein Display. Bei dem Verfahren wird auf dem Display eine vom Benutzer auswählbare Verknüpfung bereitgestellt. Diese erlaubt es, eine Untergruppe von vom Benutzer auswählbaren Einstellungsoptionen aufzurufen, die die Einstellung einer oder mehrerer vom Benutzer einstellbarer Fahrzeugeinstellungen ermöglichen.

Bei Fortbewegungsmitteln können aufgrund von Zulassungsbestimmungen oder gesetzlichen Vorgaben bestimmte Einstellungen, die der Nutzer im Fortbewegungsmittel vornimmt, nicht dauerhaft beibehalten werden. Diese Einstellungen müssen bei jedem erneuten Einschalten des Fortbewegungsmittels automatisch auf einen festgelegten Standardwert zurückgesetzt werden. In der Regel müssen alle Funktionen, die automatisch auf einen Standardwert zurückgesetzt werden, durch den Nutzer in verschiedenen Menüs für Fahrzeugeinstellungen eines Infotainmentsystems einzeln wieder auf die gewünschten Einstellungen angepasst werden.

Es ist eine Aufgabe der Erfindung, verbesserte Lösungen zum Wiederherstellen von Einstellungen einer Maschine, die automatisch von einer vom Nutzer vorgenommenen Einstellung auf einen Standardwert für die jeweilige Einstellung zurückgesetzt wurden, bereitzustellen.

Diese Aufgabe wird durch ein Verfahren mit den Merkmalen des Anspruchs 1, durch ein Computerprogramm mit Instruktionen gemäß Anspruch 10, durch eine Vorrichtung mit den Merkmalen des Anspruchs 11, durch eine Maschine gemäß Anspruch 12 sowie durch eine Nutzerschnittstelle gemäß Anspruch 14 gelöst. Bevorzugte Ausgestaltungen der Erfindung sind Gegenstand der abhängigen Ansprüche.

Gemäß einem ersten Aspekt der Erfindung umfasst ein Verfahren zum Wiederherstellen von Einstellungen einer Maschine, die automatisch von einer vom Nutzer vorgenommenen Einstellung auf einen Standardwert für die jeweilige Einstellung zurückgesetzt wurden, die Schritte:
- Generieren einer Anzeige einer Liste der automatisch auf einen Standardwert zurückgesetzten Einstellungen auf einer Anzeigevorrichtung;
- Erfassen einer Betätigung zumindest eines Bedienelements zum Wiederherstellen der vom Nutzer vorgenommenen Einstellung für zumindest eine automatisch auf einen Standardwert zurückgesetzte Einstellung;
- im Ansprechen auf die Betätigung des zumindest einen Bedienelements, Wiederherstellen der vom Nutzer vorgenommenen Einstellung für die zumindest eine automatisch auf einen Standardwert zurückgesetzte Einstellung.

Gemäß einem weiteren Aspekt der Erfindung umfasst ein Computerprogramm Instruktionen, die bei Ausführung durch einen Computer den Computer zur Ausführung der folgenden Schritte zum Wiederherstellen von Einstellungen einer Maschine, die automatisch von einer vom Nutzer vorgenommenen Einstellung auf einen Standardwert für die jeweilige Einstellung zurückgesetzt wurden, veranlassen:
- Generieren einer Anzeige einer Liste der automatisch auf einen Standardwert zurückgesetzten Einstellungen auf einer Anzeigevorrichtung;
- Erfassen einer Betätigung zumindest eines Bedienelements zum Wiederherstellen der vom Nutzer vorgenommenen Einstellung für zumindest eine automatisch auf einen Standardwert zurückgesetzte Einstellung;
- im Ansprechen auf die Betätigung des zumindest einen Bedienelements, Wiederherstellen der vom Nutzer vorgenommenen Einstellung für die zumindest eine automatisch auf einen Standardwert zurückgesetzte Einstellung.

Der Begriff Computer ist dabei breit zu verstehen. Insbesondere umfasst er auch Steuergeräte, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Wiederherstellen von Einstellungen einer Maschine, die automatisch von einer vom Nutzer vorgenommenen Einstellung auf einen Standardwert für die jeweilige Einstellung zurückgesetzt wurden, auf:
- ein Grafikmodul zum Generieren einer Anzeige einer Liste der automatisch auf einen Standardwert zurückgesetzten Einstellungen auf einer Anzeigevorrichtung;
- ein Auswertemodul zum Erfassen einer Betätigung zumindest eines Bedienelements zum Wiederherstellen der vom Nutzer vorgenommenen Einstellung für zumindest eine automatisch auf einen Standardwert zurückgesetzte Einstellung;
- ein Steuermodul zum Wiederherstellen der vom Nutzer vorgenommenen Einstellung für die zumindest eine automatisch auf einen Standardwert zurückgesetzte Einstellung im Ansprechen auf die Betätigung des zumindest einen Bedienelements.

Gemäß einem weiteren Aspekt der Erfindung weist eine Nutzerschnittstelle für einen Nutzer einer Maschine zumindest ein Bedienelement zum Wiederherstellen zumindest einer Einstellung der Maschine, die automatisch von der vom Nutzer vorgenommenen Einstellung auf einen Standardwert für die jeweilige Einstellung zurückgesetzt wurde, auf.

Bei der erfindungsgemäßen Lösung werden alle Funktionen, oder zumindest alle Funktionen eines definierten Funktionsportfolios, die sich automatisch zurücksetzen, in einem Menü vereint. Dem Nutzer wird so eine einfache und effiziente Möglichkeit geboten, die betroffenen Funktionen wieder auf die gewünschten Werte einzustellen bzw. die vorherigen Einstellungen wiederherzustellen.

Gemäß einem Aspekt der Erfindung wird ein Hinweis auf das Vorhandensein automatisch auf einen Standardwert zurückgesetzter Einstellungen angezeigt und die Liste der automatisch auf einen Standardwert zurückgesetzten Einstellungen im Ansprechen auf eine Betätigung eines Bedienelements angezeigt. Der Hinweis kann beispielsweise als grafisches Pop-up mit einem Hinweistext, als Hinweistext oder Symbol in einer Begrüßungsanzeige, oder als Hinweistext oder Symbol in einem Bedien- oder Informationsmenü angezeigt werden. Durch den Hinweis wird dem Nutzer das Zurücksetzen von Einstellungen verdeutlicht, sodass er sich entscheiden kann, ob er Einstellungen wiederherstellen möchte. Vorzugsweise ist eine Zeitspanne vorgesehen, nach deren Ablauf der Hinweis ausgeblendet wird. In diesem Fall kann vorgesehen sein, dass die Liste der automatisch auf einen Standardwert zurückgesetzten Einstellungen über einen gesonderten Menüeintrag aufgerufen werden kann.

Gemäß einem Aspekt der Erfindung ist der Hinweis als Bedienelement ausgestaltet. In diesem Fall kann der Nutzer die Liste der automatisch auf einen Standardwert zurückgesetzten Einstellungen beispielsweise durch bloßes Antippen des Hinweises aufrufen. Dies ermöglicht eine sehr intuitive Bedienung.

Gemäß einem Aspekt der Erfindung wird der Hinweis oder die Liste der automatisch auf einen Standardwert zurückgesetzten Einstellungen automatisch nach einem Start der Maschine oder einer Anmeldung eines Bedieners er Maschine angezeigt. Die Anzeige des Hinweises oder der Liste beispielsweise beim Start eines Fortbewegungsmittels, z.B. beim Betätigen eines Startknopfes, hat den Vorteil, dass der Bediener noch vor dem Losfahren die gewünschten Einstellungen wiederherstellen kann. Zudem wird der Bediener auf diesen Weg proaktiv informiert, dass Einstellungen automatisch auf einen Standardwert zurückgesetzt wurden, und er bekommt eine Liste der relevantesten Veränderungen angezeigt. Wird dabei auf eine Anmeldung des Bedieners abgestellt, können die Einstellungen darüber hinaus personalisiert wiederhergestellt werden, sodass je nach Bediener unterschiedliche Einstellungen möglich sind.

Gemäß einem Aspekt der Erfindung ist das automatische Anzeigen des Hinweises oder der Liste der automatisch auf einen Standardwert zurückgesetzten Einstellungen abschaltbar. Auf diese Weise kann der Nutzer der Maschine die gebotene Funktionalität je nach Wunsch nutzen oder deaktivieren. Das Abschalten oder Aktivieren der Funktionalität kann beispielsweise mittels entsprechender Steuerelemente vorgenommen werden, z.B. in Form von Kontrollkästchen. Diese können z.B. Bestandteil des initialen Hinweises oder der Liste der automatisch auf einen Standardwert zurückgesetzten Einstellungen sein. Alternativ oder zusätzlich können sie auch in einem Bedien- oder Informationsmenü bereitgestellt werden. Vorzugsweise erhält der Nutzer beim Abschalten der Funktionalität einen Hinweis, wie bzw. wo er diese später wieder aktivieren kann.

Gemäß einem Aspekt der Erfindung ist die Anzeigevorrichtung berührungsempfindlich ausgestaltet. Auf diese Weise kann die Bedienung unmittelbar in den von der Anzeigevorrichtung angezeigten Bildinhalten erfolgen, was eine besonders intuitive Bedienung ermöglicht.

Gemäß einem Aspekt der Erfindung sind die Bedienelemente als Schaltflächen oder Schieberegler auf der Anzeigevorrichtung ausgestaltet. Die Nutzung einfacher Schaltflächen hat den Vorteil, dass jeweils ein bloßes Antippen der Schaltflächen genügt, um die zugehörige Einstellung zu ändern. Schiebregler erlauben hingegen auch komplexere Interaktionen. Beispielsweise kann für das Deaktivieren einer Funktion, insbesondere einer sicherheitsrelevanten Funktion, eine Wischgeste erforderlich sein, um ein versehentliches Deaktivieren ausschließen zu können. Durch die Art der Interaktion, d.h. Drücken/Berühren in Kombination mit Ziehen, handelt es sich hier zudem um eine komplexe Interaktion, die als zwei Bedienschritte bewertet werden kann. Dadurch können die Sicherheitsanforderung an die Bedienung erhöht und gegebenenfalls gesetzliche Anforderungen bezüglich einer Mindestanzahl an Bedienschritten erfüllt werden.

Gemäß einem Aspekt der Erfindung wird mittels der Betätigung des zumindest eines Bedienelements die vom Nutzer vorgenommenen Einstellung für genau eine automatisch auf einen Standardwert zurückgesetzte Einstellung, für eine Auswahl automatisch auf einen Standardwert zurückgesetzter Einstellungen oder für alle automatisch auf einen Standardwert zurückgesetzten Einstellungen wiederhergestellt. Auf diese Weise lässt sich beeinflussen, wie viele Bedienelemente bereitgestellt werden müssen und wie individuell sich die Einstellungen wiederherstellen lassen. Das Wiederherstellen aller automatisch auf einen Standardwert zurückgesetzten Einstellungen mit nur einer Bedienhandlung ist dabei für den Nutzer besonders komfortabel. Vorzugsweise kann der Nutzer konfigurieren, welchen Ansatz er für das Wiederherstellen nutzen möchte.

Gemäß einem Aspekt der Erfindung sind über ein Bedienelement Informationen zu den automatisch auf einen Standardwert zurückgesetzten Einstellungen aufrufbar. Dem Nutzer kann so z.B. vermittelt werden, warum Einstellungen automatisch auf einen Standardwert zurückgesetzt wurden. Auf diese Weise kann insbesondere der Eindruck beim Nutzer vermieden werden, dass gegebenenfalls eine Fehlfunktion vorliegt.

Besonders vorteilhaft wird ein erfindungsgemäßes Verfahren oder eine erfindungsgemäße Vorrichtung in einer Maschine eingesetzt, insbesondere in einem Fortbewegungsmittel. Bei dem Fortbewegungsmittel kann es sich beispielsweise um ein Kraftfahrzeug handeln, z.B. einen Personenkraftwagen oder ein Nutzfahrzeug. Die Nutzung der erfindungsgemäßen Lösung hat dabei den Vorteil, dass dem Nutzer eine einfache und effiziente Möglichkeit geboten wird, automatisch auf einen Standardwert zurückgesetzte Einstellungen wieder auf die gewünschten Werte einzustellen. Die Nutzung der erfindungsgemäßen Lösung ist dabei nicht auf Fortbewegungsmittel beschränkt. Eine Verwendung ist auch bei anderen Arten von Maschinen möglich, z.B. bei Waschmaschinen, Fernsehern, Ladestationen, etc.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zum Wiederherstellen von Einstellungen einer Maschine, die automatisch von einer vom Nutzer vorgenommenen Einstellung auf einen Standardwert für die jeweilige Einstellung zurückgesetzt wurden;
- Fig. 2: zeigt eine erste Ausführungsform einer Vorrichtung zum Wiederherstellen von Einstellungen einer Maschine, die automatisch von einer vom Nutzer vorgenommenen Einstellung auf einen Standardwert für die jeweilige Einstellung zurückgesetzt wurden;
- Fig. 3: zeigt eine zweite Ausführungsform einer Vorrichtung zum Wiederherstellen von Einstellungen einer Maschine, die automatisch von einer vom Nutzer vorgenommenen Einstellung auf einen Standardwert für die jeweilige Einstellung zurückgesetzt wurden;
- Fig. 4: stellt schematisch als Beispiel für eine Maschine ein Fortbewegungsmittel dar, in dem eine erfindungsgemäße Lösung realisiert ist;
- Fig. 5: zeigt schematisch eine erste Ausführungsform einer Nutzerschnittstelle mit einem Hinweis auf das Vorhandensein von Einstellungen, die automatisch von einer vom Nutzer vorgenommenen Einstellung auf einen Standardwert für die jeweilige Einstellung zurückgesetzt wurden;
- Fig. 6: zeigt schematisch eine zweite Ausführungsform einer Nutzerschnittstelle mit einem Hinweis auf das Vorhandensein von Einstellungen, die automatisch von einer vom Nutzer vorgenommenen Einstellung auf einen Standardwert für die jeweilige Einstellung zurückgesetzt wurden;
- Fig. 7: zeigt schematisch eine dritte Ausführungsform einer Nutzerschnittstelle mit einem Hinweis auf das Vorhandensein von Einstellungen, die automatisch von einer vom Nutzer vorgenommenen Einstellung auf einen Standardwert für die jeweilige Einstellung zurückgesetzt wurden;
- Fig. 8: zeigt schematisch eine vierte Ausführungsform einer Nutzerschnittstelle mit einem Hinweis auf das Vorhandensein von Einstellungen, die automatisch von einer vom Nutzer vorgenommenen Einstellung auf einen Standardwert für die jeweilige Einstellung zurückgesetzt wurden;
- Fig. 9: zeigt schematisch eine Möglichkeit zum Aufrufen einer Liste automatisch auf einen Standardwert zurückgesetzter Einstellungen in einem Control Center;
- Fig. 10: zeigt schematisch eine Liste der auf einen Standardwert zurückgesetzten Einstellungen mit einem einzigen Eintrag;
- Fig. 11: zeigt schematisch eine Liste der auf einen Standardwert zurückgesetzten Einstellungen mit mehreren Einträgen;
- Fig. 12: zeigt schematisch eine Liste der auf einen Standardwert zurückgesetzten Einstellungen mit mehreren Einträgen; und
- Fig. 13: zeigt schematisch eine Liste der auf einen Standardwert zurückgesetzten Einstellungen mit einem globalen Schalter.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

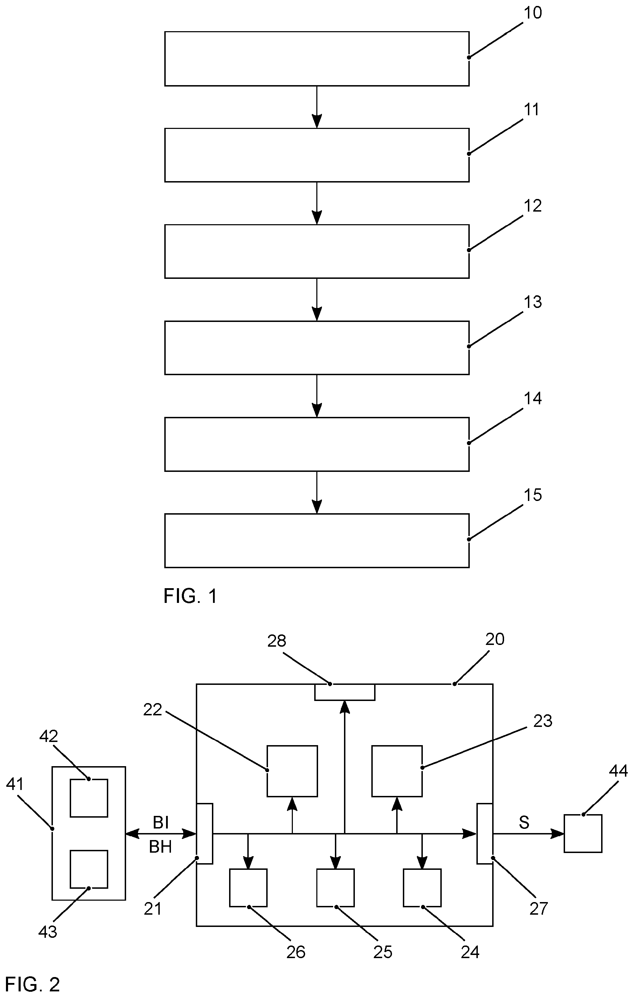

Fig. 1 zeigt schematisch ein Verfahren zum Wiederherstellen von Einstellungen einer Maschine, die automatisch von einer vom Nutzer vorgenommenen Einstellung auf einen Standardwert für die jeweilige Einstellung zurückgesetzt wurden. In einem ersten Schritt kann ein Hinweis auf das Vorhandensein automatisch auf einen Standardwert zurückgesetzter Einstellungen auf einer Anzeigevorrichtung angezeigt werden 10. Wird daraufhin eine Betätigung eines zugeordneten Bedienelements erfasst 11, so wird eine Anzeige einer Liste der auf einen Standardwert zurückgesetzten Einstellungen auf einer Anzeigevorrichtung generiert 12 und es wird zumindest ein Bedienelement zum Wiederherstellen der vom Nutzer vorgenommenen Einstellung für zumindest eine zurückgesetzte Einstellung bereitgestellt 13. Vorzugsweise ist der Hinweis auf das Vorhandensein automatisch auf einen Standardwert zurückgesetzter Einstellungen als Bedienelement ausgestaltet. Zu diesem Zweck kann die Anzeigevorrichtung berührungsempfindlich ausgestaltet sein. Anschließend wird eine Betätigung zumindest eines bereitgestellten Bedienelements erfasst 14. Die Bedienelemente können beispielsweise als Schaltflächen oder Schieberegler auf der Anzeigevorrichtung ausgestaltet sein. Im Ansprechen auf die Betätigung des zumindest einen Bedienelements wird die vom Nutzer vorgenommenen Einstellung für zumindest eine auf einen Standardwert zurückgesetzte Einstellung wiederhergestellt 15. Insbesondere kann mittels der Betätigung des zumindest eines Bedienelements die vom Nutzer vorgenommenen Einstellung für genau eine zurückgesetzte Einstellung, für eine Auswahl zurückgesetzter Einstellungen oder für alle zurückgesetzten Einstellungen wiederhergestellt werden 15. Zusätzlich können über ein weiteres Bedienelement Informationen zu den auf einen Standardwert zurückgesetzten Einstellungen aufrufbar sein. Vorzugsweise wird der Hinweis oder die Liste der auf einen Standardwert zurückgesetzten Einstellungen automatisch nach einem Start der Maschine oder einer Anmeldung eines Bedieners der Maschine angezeigt 10, 12. Das automatische Anzeigen 10, 12 des Hinweises oder der Liste der auf einen Standardwert zurückgesetzten Einstellungen kann dabei abschaltbar sein.

Fig. 2 zeigt eine vereinfachte schematische Darstellung einer ersten Ausführungsform einer Vorrichtung 20 zum Wiederherstellen von Einstellungen einer Maschine, die automatisch von einer vom Nutzer vorgenommenen Einstellung auf einen Standardwert für die jeweilige Einstellung zurückgesetzt wurden. Die Vorrichtung 20 hat eine Schnittstelle 21, über die Informationen mit einem Infotainment-System 41 ausgetauscht werden können, z.B. anzuzeigende Bildinhalte BI und Informationen zu Bedienhandlungen BH. Das Infotainment-System 41 weist eine Anzeigevorrichtung 42 und eine Eingabevorrichtung 43 auf. Die Anzeigevorrichtung 42 kann insbesondere berührungsempfindlich ausgestaltet sein. Ein Grafikmodul 22 ist dazu eingerichtet, zumindest optional einen Hinweis auf das Vorhandensein von Einstellungen, die automatisch von einer vom Nutzer vorgenommenen Einstellung auf einen Standardwert für die jeweilige Einstellung zurückgesetzt wurden, zur Anzeige durch die Anzeigevorrichtung 42 zu generieren. Wird daraufhin eine Betätigung eines zugeordneten Bedienelements der Eingabevorrichtung 43 erfasst, so wird durch das Grafikmodul 22 eine Anzeige einer Liste der automatisch auf einen Standardwert zurückgesetzten Einstellungen zur Anzeige auf der Anzeigevorrichtung 42 generiert. Vorzugsweise ist der Hinweis auf das Vorhandensein automatisch auf einen Standardwert zurückgesetzter Einstellungen als Bedienelement ausgestaltet. Ein Auswertemodul 23 ist dazu eingerichtet, eine Betätigung zumindest eines Bedienelements der Eingabevorrichtung 43 zum Wiederherstellen der vom Nutzer vorgenommenen Einstellung für zumindest eine automatisch auf einen Standardwert zurückgesetzte Einstellung zu erfassen. Die Bedienelemente können beispielsweise als Schaltflächen oder Schieberegler auf der Anzeigevorrichtung ausgestaltet sein. Ein Steuermodul 24 ist dazu eingerichtet, im Ansprechen auf die Betätigung des zumindest einen Bedienelements die vom Nutzer vorgenommenen Einstellung für zumindest eine automatisch auf einen Standardwert zurückgesetzte Einstellung wiederherzustellen. Zu diesem Zweck kann das Steuermodul 24 beispielsweise entsprechende Steuerbefehle S über einen Ausgang 27 der Vorrichtung 20 an ein von der Einstellung betroffenes Assistenzsystem 44 ausgeben. Insbesondere kann mittels der Betätigung des zumindest eines Bedienelements die vom Nutzer vorgenommenen Einstellung für genau eine automatisch auf einen Standardwert zurückgesetzte Einstellung, für eine Auswahl automatisch auf einen Standardwert zurückgesetzter Einstellungen oder für alle automatisch auf einen Standardwert zurückgesetzten Einstellungen wiederhergestellt werden. Zusätzlich können über ein weiteres Bedienelement Informationen zu den automatisch auf einen Standardwert zurückgesetzten Einstellungen aufrufbar sein. Vorzugsweise wird der Hinweis oder die Liste der automatisch auf einen Standardwert zurückgesetzten Einstellungen automatisch nach einem Start der Maschine oder einer Anmeldung eines Bedieners der Maschine angezeigt.

Das automatische Anzeigen des Hinweises oder der Liste der automatisch auf einen Standardwert zurückgesetzten Einstellungen kann dabei abschaltbar sein.

Das Grafikmodul 22, das Auswertemodul 23 und das Steuermodul 24 können von einem Kontrollmodul 25 gesteuert werden. Über eine Benutzerschnittstelle 28 können gegebenenfalls Einstellungen des Grafikmoduls 22, des Auswertemoduls 23, des Steuermoduls 24 oder des Kontrollmoduls 25 geändert werden. Die in der Vorrichtung 20 anfallenden Daten können bei Bedarf in einem Speicher 26 abgelegt werden, beispielsweise für eine spätere Auswertung oder für eine Nutzung durch die Komponenten der Vorrichtung 20. Das Grafikmodul 22, das Auswertemodul 23, das Steuermodul 24 sowie das Kontrollmodul 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Die Schnittstelle 21 und der Ausgang 27 können als getrennte Schnittstellen oder als eine kombinierte bidirektionale Schnittstelle implementiert sein.

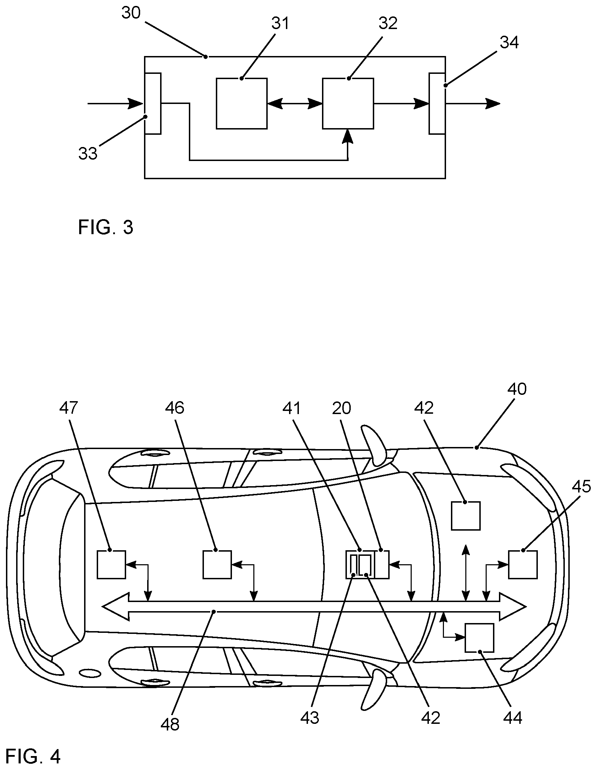

Fig. 3 zeigt eine vereinfachte schematische Darstellung einer zweiten Ausführungsform einer Vorrichtung zum Wiederherstellen von Einstellungen einer Maschine, die automatisch von einer vom Nutzer vorgenommenen Einstellung auf einen Standardwert für die jeweilige Einstellung zurückgesetzt wurden. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, beispielsweise von Informationen zu Bedienhandlungen eines Nutzers der Maschine. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 stellt schematisch als Beispiel für eine Maschine 40 ein Fortbewegungsmittel dar, in dem eine erfindungsgemäße Lösung realisiert ist. Bei dem Fortbewegungsmittel handelt es sich in diesem Beispiel um ein Kraftfahrzeug. Das Kraftfahrzeug weist ein Infotainment-System 41 mit einer Anzeigevorrichtung 42 und einer Eingabevorrichtung 43 auf. Vorzugsweise ist die Anzeigevorrichtung 42 berührungsempfindlich ausgestaltet. Mittels des Infotainment-Systems 41 kann ein Bediener des Kraftfahrzeugs Einstellungen des Kraftfahrzeugs ändern, z.B. Assistenzsysteme 44 aktivieren, deaktivieren oder konfigurieren. Mittels einer erfindungsgemäßen Vorrichtung 20 können Einstellungen, die automatisch von einer vom Nutzer vorgenommenen Einstellung auf einen Standardwert für die jeweilige Einstellung zurückgesetzt wurden, nach einem Start des Kraftfahrzeugs oder einer Anmeldung des Bedieners wiederhergestellt werden. Weitere Komponenten des Kraftfahrzeugs sind eine Umgebungssensorik 45 zum Erfassen von Umgebungsinformationen, wie Kameras, Radarsensoren, Lidarsensoren oder Ultraschallsensoren, sowie eine Datenübertragungseinheit 46. Mittels der Datenübertragungseinheit 46 kann beispielsweise eine Verbindung zu einem Backend aufgebaut werden, z.B. zum Übermitteln von Einstellungen oder zum Abrufen aktualisierter Software für die Komponenten des Kraftfahrzeugs. Zur Speicherung von Daten ist ein Speicher 47 vorhanden. Der Datenaustausch zwischen den verschiedenen Komponenten des Kraftfahrzeugs erfolgt über ein Netzwerk 48.

Nachfolgend sollen eine Reihe möglicher Umsetzungen der erfindungsgemäßen Lösung am Beispiel unterschiedlich gestalteter Nutzerschnittstellen für ein Fortbewegungsmittel aufgezeigt werden.

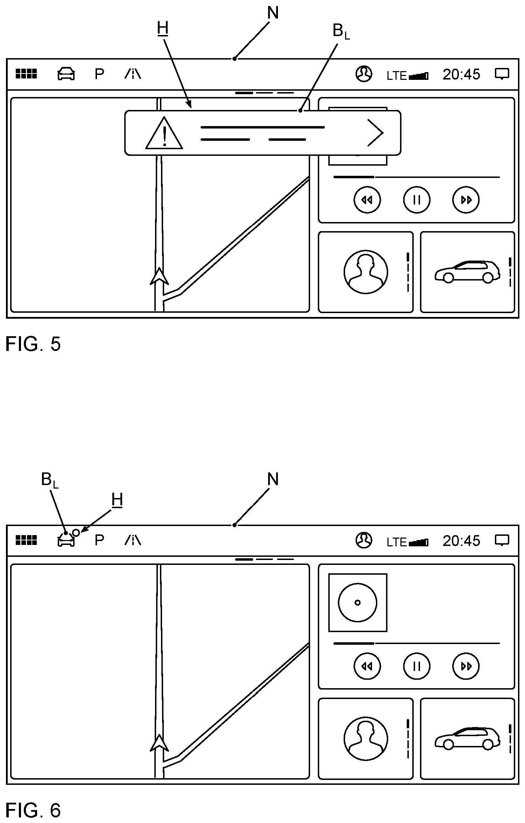

Fig. 5 zeigt schematisch eine erste Ausführungsform einer Nutzerschnittstelle N mit einem Hinweis H auf das Vorhandensein von Einstellungen, die automatisch von einer vom Nutzer vorgenommenen Einstellung auf einen Standardwert für die jeweilige Einstellung zurückgesetzt wurden. Nach der Nutzeranmeldung erscheint als Hinweis H auf das Vorhandensein automatisch auf einen Standardwert zurückgesetzter Einstellungen ein Pop-up. Der Hinweis H wird vor einer bestehenden Bedienoberfläche eingeblendet, ohne diese jedoch vollflächig zu verdecken. Zum Aufrufen einer Liste der automatisch auf einen Standardwert zurückgesetzten Einstellungen ist ein Berühren des Pop-ups erforderlich, d.h. das Pop-up dient als Bedienelement B_{L}. Die Verwendung eines Pop-ups hat den Vorteil, dass dieses praktisch nicht übersehen werden kann.

Fig. 6 zeigt schematisch eine zweite Ausführungsform einer Nutzerschnittstelle N mit einem Hinweis H auf das Vorhandensein von Einstellungen, die automatisch von einer vom Nutzer vorgenommenen Einstellung auf einen Standardwert für die jeweilige Einstellung zurückgesetzt wurden. In dieser Ausführungsform erscheint als Hinweis H auf das Vorhandensein automatisch auf einen Standardwert zurückgesetzter Einstellungen eine Markierung an einem Symbol für ein Control Center. Zum Aufrufen einer Liste der automatisch auf einen Standardwert zurückgesetzten Einstellungen ist ein Berühren des Symbols erforderlich, d.h. das Symbol dient als Bedienelement B_{L}. Die Markierung des Symbols ist weniger auffällig als ein Pop-up, kann aber aus gestalterischen Gründen vorzuziehen sein.

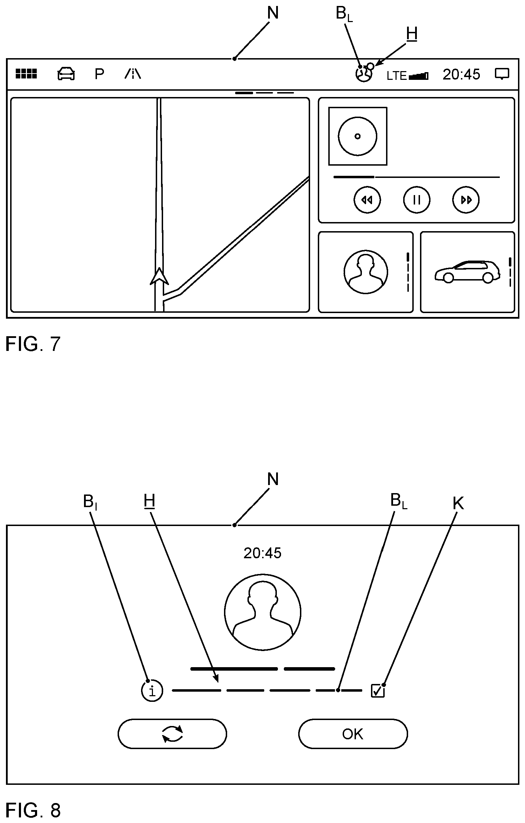

Fig. 7 zeigt schematisch eine dritte Ausführungsform einer Nutzerschnittstelle N mit einem Hinweis H auf das Vorhandensein von Einstellungen, die automatisch von einer vom Nutzer vorgenommenen Einstellung auf einen Standardwert für die jeweilige Einstellung zurückgesetzt wurden. In dieser Ausführungsform erscheint als Hinweis H auf das Vorhandensein automatisch auf einen Standardwert zurückgesetzter Einstellungen eine Markierung an einem Nutzersymbol. Zum Aufrufen einer Liste der automatisch auf einen Standardwert zurückgesetzten Einstellungen ist ein Berühren des Nutzersymbols erforderlich, d.h. das Nutzersymbol dient als Bedienelement B_{L}. Die Markierung des Nutzersymbols ist weniger auffällig als ein Pop-up, aber recht intuitiv verständlich, da über das Nutzersymbol nutzerbezogene Einstellungen aufrufbar sind.

Fig. 8 zeigt schematisch eine vierte Ausführungsform einer Nutzerschnittstelle N mit einem Hinweis H auf das Vorhandensein von Einstellungen, die automatisch von einer vom Nutzer vorgenommenen Einstellung auf einen Standardwert für die jeweilige Einstellung zurückgesetzt wurden. In dieser Ausführungsform erscheint als Hinweis H auf das Vorhandensein automatisch auf einen Standardwert zurückgesetzter Einstellungen ein Texthinweis in einer Begrüßungsanzeige. Zum Aufrufen einer Liste der automatisch auf einen Standardwert zurückgesetzten Einstellungen ist ein Berühren des Texthinweises erforderlich, d.h. der Texthinweis dient als Bedienelement B_{L}. In diesem Beispiel ist rechts neben dem Texthinweis ein Kontrollelement K vorgesehen, hier ein Kontrollkästchen, mit dem das Anzeigen des Hinweises H abgeschaltet werden kann. Links neben dem Texthinweis wird ein weiteres Bedienelement B_{I} angezeigt, über das Informationen zu den automatisch auf einen Standardwert zurückgesetzten Einstellungen aufrufbar sind. Dem Nutzer kann so z.B. mittels eines Informationstextes vermittelt werden, warum Einstellungen automatisch auf einen Standardwert zurückgesetzt wurden.

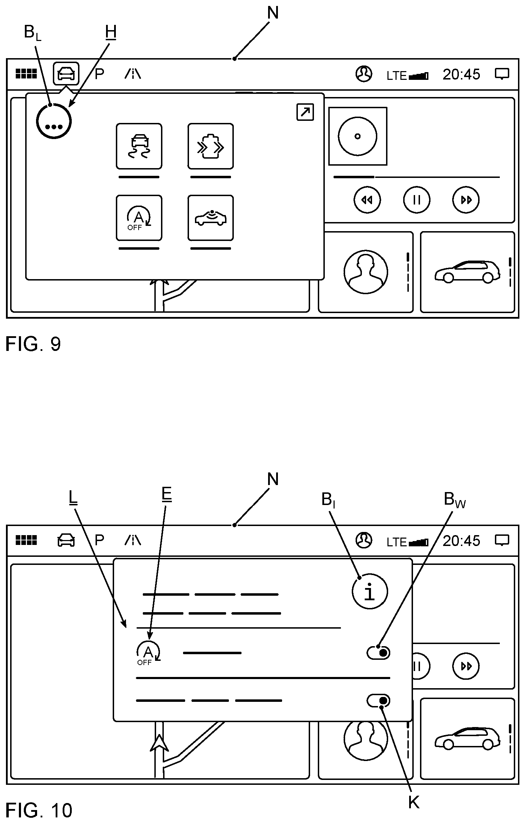

Fig. 9 zeigt schematisch eine Möglichkeit zum Aufrufen oder erneuten Aufrufen einer Liste automatisch auf einen Standardwert zurückgesetzter Einstellungen in einem Control Center. Im Control Center ist als Hinweis H auf das Vorhandensein von Einstellungen, die automatisch von einer vom Nutzer vorgenommenen Einstellung auf einen Standardwert für die jeweilige Einstellung zurückgesetzt wurden, eine Schaltfläche hervorgehoben. Zum Aufrufen der Liste der automatisch auf einen Standardwert zurückgesetzten Einstellungen ist ein Berühren der Schaltfläche erforderlich, d.h. die Schaltfläche dient als Bedienelement B_{L}. Liegen keine automatisch auf einen Standardwert zurückgesetzten Einstellungen vor, wird die Schaltfläche in reduzierter Gestaltung dargestellt. Bei Betätigung der Schaltfläche kann beispielsweise ein Hinweistext angezeigt werden, dass keine automatisch auf einen Standardwert zurückgesetzten Einstellungen vorhanden sind. Zusätzlich zum Hinweistext kann ein Kontrollelement bereitgestellt werden, mit dem das Anzeigen des Hinweises für die Zukunft abgeschaltet werden kann. Optional kann die Liste der automatisch auf einen Standardwert zurückgesetzten Einstellungen auch auf weitere Wege zugänglich sein, z.B. über einen Eintrag in einer Ereignisanzeige.

Fig. 10 zeigt schematisch eine Liste L der automatisch auf einen Standardwert zurückgesetzten Einstellungen E. In diesem Beispiel enthält die Liste L lediglich eine einzige automatisch auf einen Standardwert zurückgesetzte Einstellung E, hier eine Start/Stop-Funktion. Angrenzend an die automatisch auf einen Standardwert zurückgesetzte Einstellung E wird ein Bedienelement B_{W} zum Wiederherstellen der vom Nutzer vorgenommenen Einstellung für die automatisch auf einen Standardwert zurückgesetzte Einstellung E angezeigt. Das Bedienelement B_{W} veranschaulicht zugleich die aktuelle Einstellung. Im gezeigten Beispiel ist die Start/Stop-Funktion aktiviert. Durch Betätigen des Bedienelements B_{W} kann die vorherige Einstellung vom Nutzer wiederhergestellt werden. Zusätzlich zur automatisch auf einen Standardwert zurückgesetzten Einstellung E wird ein Kontrollelement K angezeigt, mit dem das Anzeigen des Hinweises für die Zukunft abgeschaltet werden kann. Über das Kontrollelement K kann das Anzeigen des Hinweises zu einem späteren Zeitpunkt auch wieder angeschaltet werden. Des Weiteren wird ein weiteres Bedienelement B_{I} angezeigt, über das Informationen zu den automatisch auf einen Standardwert zurückgesetzten Einstellungen E aufrufbar sind. Dem Nutzer kann so z.B. mittels eines Informationstextes vermittelt werden, warum Einstellungen E automatisch auf einen Standardwert zurückgesetzt wurden.

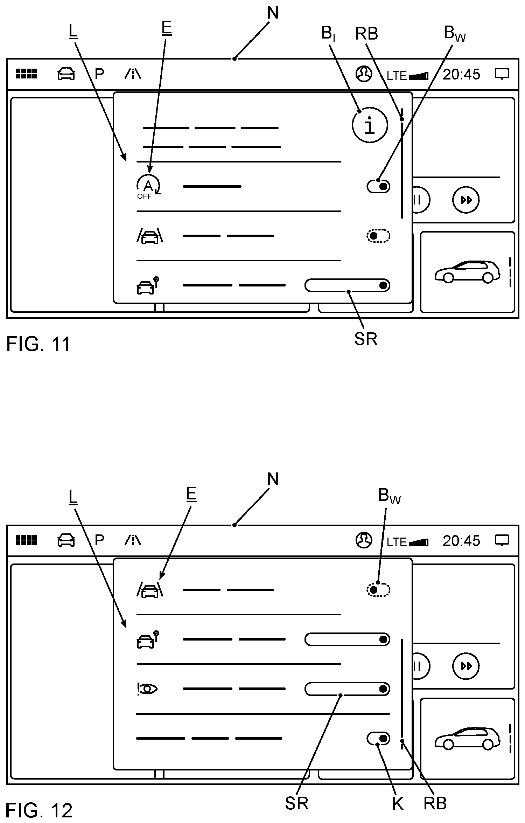

Fig. 11 zeigt schematisch eine Liste L der automatisch auf einen Standardwert zurückgesetzten Einstellungen E mit mehreren Einträgen. Da die Liste L alle zuletzt automatisch auf einen Standardwert zurückgesetzten Einstellungen E enthält, ist ihre Länge dynamisch. In diesem Beispiel können nicht alle automatisch auf einen Standardwert zurückgesetzten Einstellungen E gleichzeitig dargestellt werden. Daher weist die Liste L einen Rollbalken RB auf, mit dem weitere Einträge erreichbar sind. Dies ist in Fig. 12 dargestellt. Angrenzend an die automatisch auf einen Standardwert zurückgesetzten Einstellungen E wird jeweils ein Bedienelement B_{W} zum Wiederherstellen der vom Nutzer vorgenommenen Einstellung für die jeweilige automatisch auf einen Standardwert zurückgesetzte Einstellung E angezeigt. Das Bedienelement B_{W} veranschaulicht zugleich die aktuelle Einstellung. Für eine komplexere Interaktion sind einige der Bedienelemente B_{W} als längliche Schieberegler SR realisiert. Bei diesen Bedienelementen B_{W} ist eine Wischgeste zum Wiederherstellen der vorherigen Einstellung erforderlich, um eine versehentliche Änderung der Einstellung auszuschließen und um gegebenenfalls gesetzliche Anforderungen an eine Mindestanzahl an Bedienschritten zu erfüllen. Über den Schieberegler SR kann dabei ein unterschiedliches Verhalten für das Aktivieren und das Deaktivieren umgesetzt werden. Beispielsweise kann für ein Deaktivieren eine Wischgeste bestehend aus Drücken/Berühren und Wischen genutzt werden, wohingegen für die Aktivierung eine einfache Berührung genutzt wird, sofern keine Anforderung an eine komplexe Bediengeste beziehungsweise mehrere Bedienschritte besteht. Alternativ kann anstelle des Schiebereglers SR als komplexes Bedienelement auch eine Zwei-Schritt-Bedienung vorgehalten werden, um die Anforderung an mehrere Bedienschritte zu erfüllen. Zusätzlich zu den automatisch auf einen Standardwert zurückgesetzten Einstellungen E wird wie schon in Fig. 10 ein Kontrollelement K angezeigt, mit dem das Anzeigen des Hinweises für die Zukunft abgeschaltet werden kann.

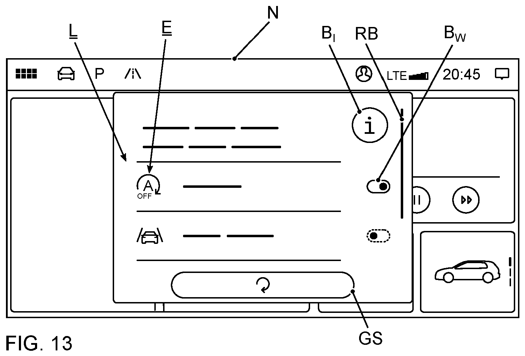

Fig. 13 zeigt schematisch eine Liste L der automatisch auf einen Standardwert zurückgesetzten Einstellungen E mit einem globalen Schalter GS. Die Darstellung der Liste L ist im Wesentlichen identisch mit der in Fig. 11 gezeigten Darstellung Unterhalb der Liste L wird in diesem Fall als Bedienelement B_{W} jedoch ein globaler Schalter GS angezeigt, durch dessen Betätigung sich mit nur einer Bedienhandlung alle vom Nutzer vorgenommenen Einstellungen E wiederherstellen lassen. Eine manuelle Bedienung der einzelnen Einträge ist dabei weiterhin uneingeschränkt möglich.

Vorzugsweise wirken die oben angeführten Bedienelemente B_{W} in beide Richtungen, sodass nicht nur die vorherigen vom Nutzer vorgenommenen Einstellungen wiederhergestellt werden können, sondern die Funktionen später auch wieder aktiviert oder deaktiviert werden können. Beispielsweise kann der Spurhalteassistent automatisch bei Start des Fahrzeugs auf "aktiv" gesetzt. Mit der erfindungsgemäßen Lösung hat der Fahrer die Möglichkeit, die Funktion schnell und einfach wieder zu deaktivieren. Der Fahrer kann sich im Verlaufe der Fahrt aber auch überlegen, die Funktion wieder aktivieren zu wollen, und kann die Liste L z.B. über das Control Center wieder öffnen. Nun kann er die Funktion im Anschluss über den Listeneintrag auch wieder aktivieren.

### Bezugszeichenliste

- 10: Anzeigen eines Hinweises auf zurückgesetzte Einstellungen
- 11: Erfassen einer Betätigung eines Bedienelements
- 12: Generieren einer Anzeige einer Liste zurückgesetzter Einstellungen
- 13: Bereitstellen zumindest eines Bedienelements
- 14: Erfassen einer Betätigung eines Bedienelements
- 15: Wiederherstellen zumindest einer zurückgesetzten Einstellung
- 20: Vorrichtung
- 21: Schnittstelle
- 22: Grafikmodul
- 23: Auswertemodul
- 24: Steuermodul
- 25: Kontrollmodul
- 26: Speicher
- 27: Ausgang
- 28: Benutzerschnittstelle
- 30: Vorrichtung
- 31: Speicher
- 32: Prozessor
- 33: Eingang
- 34: Ausgang
- 40: Maschine
- 41: Infotainment-System
- 42: Anzeigevorrichtung
- 43: Eingabevorrichtung
- 44: Assistenzsystem
- 45: Umgebungssensorik
- 46: Datenübertragungseinheit
- 47: Speicher
- 48: Netzwerk
- B_{I}: Bedienelement
- B_{L}: Bedienelement
- B_{W}: Bedienelement
- BH: Informationen zu Bedienhandlungen
- BI: Anzuzeigende Bildinhalte
- E: Einstellung
- GS: Globaler Schalter
- H: Hinweis
- K: Kontrollelement
- L: Liste
- N: Nutzerschnittstelle
- RB: Rollbalken
- S: Steuerbefehl
- SR: Schieberegler

## Patentansprüche

1. Verfahren zum Wiederherstellen von Einstellungen (E) einer Maschine (40), die automatisch von einer vom Nutzer vorgenommenen Einstellung (E) auf einen Standardwert für die jeweilige Einstellung (E) zurückgesetzt wurden, mit den Schritten:
- Generieren (12) einer Anzeige einer Liste (L) der automatisch auf einen Standardwert zurückgesetzten Einstellungen (E) auf einer Anzeigevorrichtung (42);
- Erfassen (14) einer Betätigung zumindest eines Bedienelements (B_{W}) zum Wiederherstellen der vom Nutzer vorgenommenen Einstellung (E) für zumindest eine automatisch auf einen Standardwert zurückgesetzte Einstellung (E);
- im Ansprechen auf die Betätigung des zumindest einen Bedienelements (B_{W}), Wiederherstellen (15) der vom Nutzer vorgenommenen Einstellung (E) für die zumindest eine automatisch auf einen Standardwert zurückgesetzte Einstellung (E).

2. Verfahren gemäß Anspruch 1, wobei ein Hinweis (H) auf das Vorhandensein automatisch auf einen Standardwert zurückgesetzter Einstellungen (E) angezeigt wird (10) und die Liste (L) der automatisch auf einen Standardwert zurückgesetzten Einstellungen (E) im Ansprechen auf eine Betätigung (11) eines Bedienelements (B_{L}) angezeigt wird (12).

3. Verfahren gemäß Anspruch 2, wobei der Hinweis (H) als Bedienelement (B_{L}) ausgestaltet ist.

4. Verfahren gemäß einem der vorherigen Ansprüche, wobei der Hinweis (H) oder die Liste (L) der automatisch auf einen Standardwert zurückgesetzten Einstellungen (E) automatisch nach einem Start der Maschine (40) oder einer Anmeldung eines Bedieners der Maschine (40) angezeigt wird (10, 12).

5. Verfahren gemäß Anspruch 4, wobei das automatische Anzeigen (10, 12) des Hinweises (H) oder der Liste (L) der automatisch auf einen Standardwert zurückgesetzten Einstellungen (E) abschaltbar ist.

6. Verfahren gemäß einem der vorherigen Ansprüche, wobei die Anzeigevorrichtung (42) berührungsempfindlich ausgestaltet ist.

7. Verfahren gemäß Anspruch 6, wobei die Bedienelemente (B_{L}, B_{W}) als Schaltflächen oder Schieberegler auf der Anzeigevorrichtung (42) ausgestaltet sind.

8. Verfahren gemäß einem der vorherigen Ansprüche, wobei mittels der Betätigung des zumindest eines Bedienelements (B_{W}) die vom Nutzer vorgenommenen Einstellung für genau eine automatisch auf einen Standardwert zurückgesetzte Einstellung (E), für eine Auswahl automatisch auf einen Standardwert zurückgesetzter Einstellungen (E) oder für alle automatisch auf einen Standardwert zurückgesetzten Einstellungen (E) wiederhergestellt wird (15).

9. Verfahren gemäß einem der vorherigen Ansprüche, wobei über ein Bedienelement (B_{I}) Informationen zu den automatisch auf einen Standardwert zurückgesetzten Einstellungen (E) aufrufbar sind.

10. Computerprogramm mit Instruktionen, die bei Ausführung durch einen Computer den Computer zur Ausführung der Schritte eines Verfahrens gemäß einem der Ansprüche 1 bis 9 zum Wiederherstellen von Einstellungen (E) einer Maschine (40) veranlassen.

11. Vorrichtung zum Wiederherstellen von Einstellungen (E) einer Maschine (40), die automatisch von einer vom Nutzer vorgenommenen Einstellung (E) auf einen Standardwert für die jeweilige Einstellung (E) zurückgesetzt wurden, mit:
- einem Grafikmodul (22) zum Generieren (12) einer Anzeige einer Liste (L) der automatisch auf einen Standardwert zurückgesetzten Einstellungen (E) auf einer Anzeigevorrichtung (42);
- einem Auswertemodul (23) zum Erfassen (14) einer Betätigung zumindest eines Bedienelements (B_{W}) zum Wiederherstellen der vom Nutzer vorgenommenen Einstellung (E) für zumindest eine automatisch auf einen Standardwert zurückgesetzte Einstellung (E);
- einem Steuermodul (24) zum Wiederherstellen (15) der vom Nutzer vorgenommenen Einstellung (E) für die zumindest eine automatisch auf einen Standardwert zurückgesetzte Einstellung (E) im Ansprechen auf die Betätigung des zumindest einen Bedienelements (B_{W}).

12. Maschine (40), **dadurch gekennzeichnet, dass** die Maschine (40) eine Vorrichtung (20) gemäß Anspruch 11 aufweist.

13. Maschine (40) gemäß Anspruch 12, wobei es sich bei der Maschine (40) um ein Fortbewegungsmittel handelt.

## Claims

1. Method for restoring settings (E) of a machine (40) that were automatically reset from a user-defined setting (E) to a default value for the particular setting (E), the method comprising the steps of:
- generating (12) a display of a list (L) of the settings (E) that were automatically reset to a default value on a display device (42);
- detecting (14) an actuation of at least one operating element (B_{W}) for restoring the user-defined setting (E) for at least one setting (E) that was automatically reset to a default value;
- in response to the actuation of the at least one operating element (Bw), restoring (15) the user-defined setting (E) for the at least one setting (E) that was automatically reset to a default value.

2. Method according to claim 1, wherein a notification (H) that there are settings (E) that were automatically reset to a default value is displayed (10) and the list (L) of the settings (E) that were automatically reset to a default value is displayed (12) in response to an actuation (11) of an operating element (B_{L}).

3. Method according to claim 2, wherein the notification (H) is in the form of the operating element (B_{L}).

4. Method according to any of the preceding claims, wherein the notification (H) or the list (L) of the settings (E) that were automatically reset to a default value is automatically displayed (10, 12) after the machine (40) is started or after an operator of the machine (40) logs in.

5. Method according to claim 4, wherein the automatic displaying (10, 12) of the notification (H) or of the list (L) of the settings (E) that were automatically reset to a default value can be turned off.

6. Method according to any of the preceding claims, wherein the display device (42) is touch-sensitive.

7. Method according to claim 6, wherein the operating elements (B_{L}, Bw) are in the form of buttons or sliders on the display device (42).

8. Method according to any of the preceding claims, wherein by actuating the at least one operating element (Bw), the user-defined setting is restored (15) for exactly one setting (E) that was automatically reset to a default value, for a selection of settings (E) that were automatically reset to a default value, or for all settings (E) that were automatically reset to a default value.

9. Method according to any of the preceding claims, wherein information relating to the settings (E) that were automatically reset to a default value can be accessed via an operating element (B_{I}).

10. Computer program comprising instructions that, when executed by a computer, cause the computer to carry out the steps of a method according to any of claims 1 to 9 for restoring settings (E) of a machine (40).

11. Device for restoring settings (E) of a machine (40) that were automatically reset from a user-defined setting (E) to a default value for the particular setting (E), the device comprising:
- a graphics module (22) for generating (12) a display of a list (L) of the settings (E) that were automatically reset to a default value on a display device (42);
- an evaluation module (23) for detecting (14) an actuation of at least one operating element (Bw) for restoring the user-defined setting (E) for at least one setting (E) that was automatically reset to a default value;
- a control module (24) for restoring (15), in response to the actuation of the at least one operating element (Bw), the user-defined setting (E) for the at least one setting (E) that was automatically reset to a default value.

12. Machine (40), **characterized in that** the machine (40) has a device (20) according to claim 11.

13. Machine (40) according to claim 12, wherein the machine (40) is a means of transport.

## Revendications

1. Procédé permettant de rétablir des réglages (E) d'une machine (40) qui ont été automatiquement réinitialisés d'un réglage (E) effectué par l'utilisateur à une valeur par défaut pour le réglage (E) respectif, comportant les étapes consistant à :
- générer (12) un affichage d'une liste (L) des réglages (E) automatiquement réinitialisés à une valeur par défaut sur un dispositif d'affichage (42) ;
- détecter (14) un actionnement d'au moins un élément de commande (Bw) permettant de rétablir le réglage (E) effectué par l'utilisateur pour au moins un réglage (E) automatiquement réinitialisé à une valeur par défaut ;
- en réponse à l'actionnement de l'au moins un élément de commande (Bw), rétablir (15) le réglage (E) effectué par l'utilisateur pour l'au moins un réglage (E) automatiquement réinitialisé à une valeur par défaut.

2. Procédé selon la revendication 1, dans lequel une indication (H) de la présence de réglages (E) automatiquement réinitialisés à une valeur par défaut est affichée (10) et la liste (L) des réglages (E) automatiquement réinitialisés à une valeur par défaut est affichée (12) en réponse à un actionnement (11) d'un élément de commande (B_{L}).

3. Procédé selon la revendication 2, dans lequel l'indication (H) est conçue comme un élément de commande (B_{L}).

4. Procédé selon l'une des revendications précédentes, dans lequel l'indication (H) ou la liste (L) des réglages (E) automatiquement réinitialisés à une valeur par défaut est affichée (10, 12) automatiquement après un démarrage de la machine (40) ou après une connexion d'un opérateur de la machine (40).

5. Procédé selon la revendication 4, dans lequel l'affichage (10, 12) automatique de l'indication (H) ou de la liste (L) des réglages (E) automatiquement réinitialisés à une valeur par défaut peut être désactivé.

6. Procédé selon l'une des revendications précédentes, dans lequel le dispositif d'affichage (42) est conçu pour être sensible au toucher.

7. Procédé selon la revendication 6, dans lequel les éléments de commande (B_{L}, Bw) sont conçus comme des boutons de commande ou des curseurs de réglage sur le dispositif d'affichage (42).

8. Procédé selon l'une des revendications précédentes, dans lequel, au moyen de l'actionnement de l'au moins un élément de commande (B_{W}), le réglage effectué par l'utilisateur est rétabli (15) pour exactement un réglage (E) automatiquement réinitialisé à une valeur par défaut, pour une sélection de réglages (E) automatiquement réinitialisés à une valeur par défaut ou pour tous les réglages (E) automatiquement réinitialisés à une valeur par défaut.

9. Procédé selon l'une des revendications précédentes, dans lequel des informations concernant les réglages (E) automatiquement réinitialisés à une valeur par défaut peuvent être appelées par l'intermédiaire d'un élément de commande (B_{I}).

10. Programme informatique comportant des instructions qui, lors de leur exécution par un ordinateur, amènent l'ordinateur à exécuter les étapes d'un procédé selon l'une des revendications 1 à 9 pour permettre de rétablir des réglages (E) d'une machine (40).

11. Dispositif permettant de rétablir des réglages (E) d'une machine (40) qui ont été automatiquement réinitialisés d'un réglage (E) effectué par l'utilisateur à une valeur par défaut pour le réglage (E) respectif, comportant :
- un module graphique (22) permettant de générer (12) un affichage d'une liste (L) des réglages (E) automatiquement réinitialisés à une valeur par défaut sur un dispositif d'affichage (42) ;
- un module d'évaluation (23) permettant de détecter (14) un actionnement d'au moins un élément de commande (Bw) permettant de rétablir le réglage (E) effectué par l'utilisateur pour au moins un réglage (E) automatiquement réinitialisé à une valeur par défaut ;
- un module de commande (24) permettant de rétablir (15) le réglage (E) effectué par l'utilisateur pour l'au moins un réglage (E) automatiquement réinitialisé à une valeur par défaut en réponse à l'actionnement de l'au moins un élément de commande (Bw).

12. Machine (40), **caractérisée en ce que** la machine (40) présente un dispositif (20) selon la revendication 11.

13. Machine (40) selon la revendication 12, dans laquelle la machine (40) est un moyen de locomotion.
